# EUROPÄISCHE PATENTANMELDUNG

(11) **EP 0 998 071 A2**
(43) Veröffentlichungstag der Anmeldung: **03.05.2000**
(21) Anmeldenummer: 99810909.4
(22) Anmeldetag: 06.10.1999
(51) Int. Cl.: H04L 1/00, H04L 1/04, H04L 27/26

(54) **Adaptives Modulationsverfahren**

(30) Priorität: 30.10.1998 DE 19850050
(71) Anmelder: ABB RESEARCH LTD., 8050 Zürich (CH)
(72) Erfinder: Sabbattini, Bruno, 5430 Wittingen (CH); Ramseier, Stefan, Dr., 5416 Kirchdorf (CH); Lehmann, Josef, 79761 Waldshut (DE); Dzung, Dacfey, Dr., 5430 Wettingen (CH); Ostertag, Martin, Dr., 5405 Baden (CH); Deck, Bernhard, 79809 Weilheim (DE); Cachin, Dominique, 8400 Winterthur (CH)
(74) Vertreter: Clerc, Natalia

(57) **Zusammenfassung**

Zum Übertragen von Daten werden die Übertragungseigenschaften des Kanals gemessen. Abhängig von den Übertragungseigenschaften werden adaptiv unterschiedliche Modulationsarten gewählt. Die bevorzugten Modulationsarten sind a) Mehrträgermodulation mit unterschiedlichen Daten auf jedem Träger, b) Mehrträgermodulation mit den gleichen Daten auf jedem Träger und c) Einzelträgermodulation. Allen Modulationsarten sind die wichtigsten Modulationsparameter (Datenrate, Anzahl Abtastwerte pro Symbol, Telegrammformat) gemeinsam, so dass der Demodulationsaufwand möglichst einfach bleibt.

## Beschreibung

### Technisches Gebiet

Die Erfindung betrifft ein Verfahren zur Datenübertragung gemäss Oberbegriff von Anspruch 1.

### Stand der Technik

Die Übermittlung von Daten kann durch Störungen und mangelnde Qualität des Übertragungskanals beeinträchtigt werden. Dies gilt insbesondere auch für die Mehrträgermodulation, bei welcher mehrere modulierte Träger über den Frequenzbereich eines Kanals verteilt werden.

In ANSI T1.413-1995, "Network and customer installation interfaces - Asymmetric Digital Subscriber Line (ADSL) Metallic Interface" wird ein Verfahren beschrieben, bei welchem beim Verbindungsaufbau zuerst ein breitbandiges Testsignal gesendet wird, und danach aufgrund des Empfangssignals eine frequenzabhängige Zahl von Bits pro Kanal festgelegt wird. Dieses Verfahren geht davon aus, dass der Übertragungskanal im gesamten Frequenzbereich relativ gute und stabile Qualität besitzt. Zur Einstellung der Konfiguration muss ein aufwendiges Protokoll zwischen Sender und Empfänger ablaufen.

### Darstellung der Erfindung

Es stellt sich die Aufgabe, ein Verfahren der eingangs genannten Art bereitzustellen, welches die Kanalqualität in möglichst effizienter Weise bei der Datenübertragung berücksichtigt.

Diese Aufgabe wird vom Verfahren gemäss Anspruch 1 gelöst.

Erfindungsgemäss werden also die Übertragungseigenschaften des Kanals gemessen und aufgrund dieser Eigenschaften adaptiv unterschiedliche Modulationsarten ausgewählt. Somit passt sich die Übertragung auch ändernden Eigenschaften des Kanals an. Mindestens eine der Modulationsarten ist ein Mehrträgerverfahren, was den Vorteil hat, dass einzelne Störfrequenzen oder zu stark gedämpfte Frequenzbereiche im Kanal weniger Gewicht haben. Dies erlaubt eine optimale Anpassung der Übertragung an den jeweiligen Kanalzustand.

Vorzugsweise ist die Datenübertragung telegrammbasiert. Die jeweils verwendete Modulationsart kann in diesem Fall in die Präambel der Telegramme einkodiert werden. So können z.B. zur Unterscheidung zweier Modulationsarten zwei zueinander invertierte Präambeln eingesetzt werden. Da in der Regel zur Detektion der Präambel Korrelatoren eingesetzt werden, kann die Modulationsart in einfacher Weise aus dem Vorzeichen der Korrelationssignale ermittelt werden.

Vorzugsweise werden in einer ersten Modulationsart mehrere Träger redundant mit den gleichen Daten moduliert. Dies hat den Vorteil, dass bei Störungen eines Trägers das Signal aus den anderen Trägern ermittelt werden kann. In einer zweiten Modulationsart können diese Träger unabhängig voneinander Daten führen, so dass für beide Modulationsarten die gleichen Demodulationstechniken eingesetzt werden können.

In einer anderen Modulationsart kann nur ein einziger Träger gesendet werden. Dies hat den Vorteil, dass alle Sendeenergie in diesen einen Träger eingespiesen werden kann. Der Träger wird vorzugsweise auf der Frequenz gewählt, auf welcher der Kanal die beste Übertragungsqualität aufweist.

Das erfindungsgemässe Verfahren eignet sich zur Übertragung von Daten aller Art, wie z.B. von Bilddaten, Tondaten und numerischen Daten. Insbesondere eignet es sich für die telegrammbasierte Datenübertragung über das elektrische Stromleitungsnetz.

### Kurze Beschreibung der Zeichnungen

Weitere Vorteile und Anwendungen der Erfindung ergeben sich aus den abhängigen Ansprüchen und aus der nun folgenden Beschreibung anhand der Figuren. Dabei zeigen:
Fig. 1 das Frequenzspektrum bei Mehrträgermodulation und
Fig. 2 den Verfahrensablauf zur Auswahl der besten Modulationsart.

### Weg zur Ausführung der Erfindung

Bei der vorliegenden Ausführung wird ein Übertragungssystem betrachtet, welches Mehrträgermodulation unterstützt, wie es z.B. zur Datenübertragung über das elektrische Stromleitungsnetz eingesetzt wird.

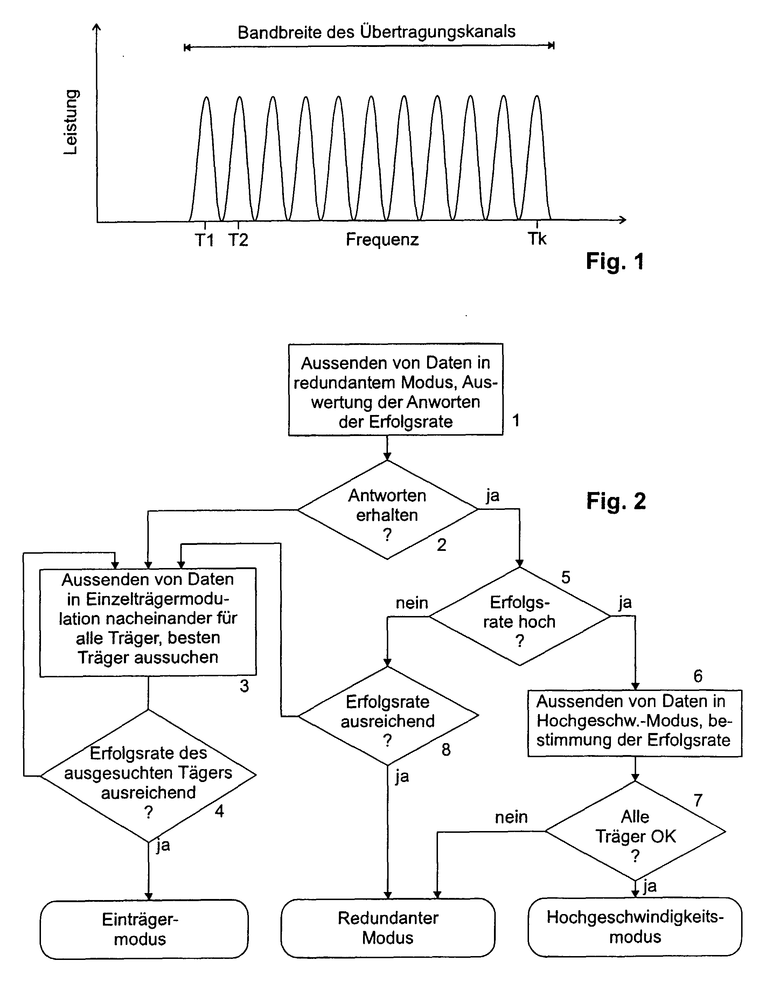

Fig. 1 zeigt das Frequenzspektrum bei Mehrträgermodulation mit mehreren Trägern, die über die Bandbreite des Übertragungskanals verteilt sind. Die Träger verwenden Trägerfrequenzen T1, T2, ... Tk. Üblicherweise werden die einzelnen Träger mit unterschiedlichen Daten moduliert.

Im Rahmen des vorliegenden Verfahrens werden verschiedene Arten von Mehrträgermodulationen und gegebenenfalls auch andere Modulationsarten kombiniert, um eine optimale Übermittlung im Rahmen der physikalischen Übertragungseigenschaften des verwendeten Kanals zu erreichen. In allen Modulationsarten werden jedoch die gleichen grundsätzlichen Modulationsparameter verwendet, so dass im wesentlichen die gleichen Demodulationstechniken zum Einsatz kommen können und eine Konfigurationsänderung durch Software möglich ist. Bei digitaler Implementierung der Mehrträgermodulation werden sinnvollerweise das Datenformat, die Abtastrate und die Anzahl Abtastwerte pro Symbol unverändert gelassen, während die Anzahl Träger und die Art der von ihnen übertragenen Daten wie unten beschrieben für verschiedene Modulationsarten unterschiedlich sein kann. Damit kann insbesondere frequenzabhängigen Signaldämpfungen und Störungen entgegengewirkt werden.

Im folgenden wird beschrieben, was für Modulationsarten in einer bevorzugten Ausführung der Erfindung verwendet werden und wie deren Auswahl erfolgt.

In der vorliegenden Ausführung werden drei verschiedene Modulationsarten eingesetzt, von denen zwei Mehrträgerverfahren sind:
1. "Hochgeschwindigkeitsmodus": Auf jeden Träger werden unterschiedliche Daten aufmoduliert. Dies entspricht der konventionellen Mehrträgermodulation mit maximaler Datenübertragungsgeschwindigkeit.
2. "Redundanter Modus": Auf jeden Träger wird die gleiche Datenfolge aufmoduliert. Dies erlaubt es dem Empfänger, Daten auch dann noch zu empfangen, wenn der Übertragungskanal alle bis auf eine Trägerfrequenz stört bzw. unterdrückt. Der redundante Modus besitzt eine tiefere Übertragungsgeschwindigkeit als der Hochgeschwindigkeitsmodus.
3. "Einzelträgermodus": Nur ein einziger Träger wird benutzt. Dies hat gegenüber dem redundanten Modus den Vorteil, dass die ganze Sendeleistung auf diesen Träger gelegt werden und somit dessen Empfang verbessert werden kann. Dies ist insbesondere bei einer über dem ganzen Band vorhandenen hohen Dämpfung oder erhöhtem Störpegel von Vorteil. Der verwendete Träger ist vorzugsweise einer derjenigen Träger, die auch im "Hochgeschwindigkeitsmodus" und im "Einzelträgermodus" eingesetzt werden.
Es sind auch zusätzliche weitere Mischformen der einzelnen Modulationsarten denkbar (z. B. je zwei Träger werden mit den gleichen Daten moduliert), wobei eine der Modulationsarten 1 - 3 durch eine solche Mischform ersetzt werden kann oder die Gesamtzahl der Modulationsarten erhöht wird.

Wie erwähnt können alle Modulationsarten die gleiche Abtastrate und die gleiche Anzahl von Abtastwerten verwenden, ebenso das gleiche Datenformat, was die Implementierung vereinfacht. Es ist jedoch denkbar, dass auch diese Parameter verändert werden, um eine noch bessere Anpassung zu gewährleisten. So können sich die Modulationsarten z.B. auch in der Übertragungsrate oder der Länge der Datenpakete unterscheiden.

Zur korrekten Demodulierung der Daten muss der Empfänger die jeweilige Modulationsart erkennen können. Hierzu kann der Empfänger z.B. die empfangenen Signale mit allen möglichen Demodulationsarten analysieren und aufgrund von Datensicherungsmechanismen (z.B. CRC) prüfen, ob sich korrekte Daten ergeben. Dies ist jedoch rechnerisch aufwendig und es werden einfachere Methoden bevorzugt.

Zur Unterscheidung des Einzelträgermodus von den übrigen Modulationsarten, d.h. von den beiden Mehrträgerverfahren 1 und 2, kann der Empfänger z.B. prüfen, auf welchen Trägerfrequenzen Signale empfangen werden. Wird nur auf einem Träger ein Signal empfangen, so liegt der Einzelträgermodus vor. Dieses Vorgehen ist möglich, da im Einzelträgermodus eine der Trägerfrequenzen verwendet wird, die auch in den Mehrträgerverfahren eingesetzt werden.

Alternativ kann der Empfänger zur Unterscheidung des Einzelträgermodus von den Mehrträgerverfahren das Leistungsspektrum des Signals analysieren. Während in den Mehrträgerverfahren Leistungsmaxima auf mehreren Trägerfrequenzen vorhanden sind, liegt im Falle des Einzelträgermodus nur eine Leistungsspitze vor.

In der Praxis ist es allerdings für den Empfänger an sich unerheblich, ob der Einzelträgermodus oder der redundante Modus eingesetzt wird. In beiden Fällen kann der Empfänger alle Daten durch Demodulierung des stärksten bzw. besten Trägersignals erhalten.

Zur Unterscheidung zwischen dem Hochgeschwindigkeitsmodus und den übrigen Übertragungsarten markiert der Sender die Daten in spezieller Weise.

Die Daten werden als "Telegramme" mit einer Präambel und einem Datenteil verschickt. Die Präambel dient zur Markierung des Starts der Pakete und zur Synchronisation des Empfängers. Sie besteht aus einer vordefinierten Bitfolge, die sich durch Korrelationsverfahren einfach erkennen lässt. In der vorliegenden Ausführung werden nun zwei verschiedene Präambeln verwendet, je nachdem ob der Hochgeschwindigkeitsmodus eingesetzt wird oder nicht. Vorzugsweise entspricht dabei die eine Präambel der binär invertierten zweiten Präambel (z.B. 111 1010 1110 0110 1000 0000 für die erste Präambel und 000 0101 0001 1001 0111 1111 für die zweite). Wird die Präambel mittels Korrelationsverfahren im Datenstrom gesucht, so unterscheiden sich die beiden Präambeln durch das vom Korrelator gelieferte Vorzeichen. Es können also bereits bekannte Auswertetechniken eingesetzt werden.

Es ist jedoch auch denkbar, dass sich die Präambeln verschiedener Übertragungsarten in anderer Weise voneinander unterschieden, z.B. durch Inversion eines oder einiger weniger Bits.

Im folgenden wird ein bevorzugtes Auswahlverfahren beschrieben, mit welchem die geeignete Modulationsart ausgewählt wird. Dieses Verfahren kann sowohl als eine Art "Handshake" immer vor der eigentlichen Kommunikation oder während Zeiten mit wenig Telegrammverkehr, zumindest aber nach Ablauf einer gewissen Zeit und bei erhöhten Fehlerraten ausgeführt werden, so dass die Modulationsart adaptiv an die jeweiligen Kanaleigenschaften angepasst werden kann. Es ist auch denkbar, während der Durchführung des Auswahlverfahrens bereits Nutzdaten zu übermitteln.

Das Auswahlverfahren beruht darauf, dass der Sender an einen Empfänger Meldungen in den verschiedenen Modulationsarten schickt und prüft, ob und mit welcher Qualität diese angekommen sind. Hierzu sendet der Empfänger bei Empfang einer Meldung jeweils ein geeignetes Antwortsignal an den Sender. Das Verfahren ist vereinfacht in Fig. 2 dargestellt und umfasst folgende Schritte:
1. Paralleles Senden von Daten im redundanten Modus. Der Empfänger zählt dabei die Anzahl der Antwortsignale und merkt sich die in den Antworten mitgeteilte Empfangsqualität.
2. Wenn der Empfänger gar keine Antworten erhält, so ist der Kanal stark und breitbandig gestört oder stark dämpfend. Die Übertragung hat in Einzelmodus zu geschehen.
3. Zur Bestimmung des besten Trägers zur Übermittlung im Einzelmodus werden nacheinander alle Träger im Einzelmodus durchprobiert und der beste Träger wird bestimmt.
4. Ist die Signalqualität auf dem besten Träger ausreichend, so wird dieser für den Einzelmodus eingesetzt. Ansonsten beginnt Schritt 3 von neuem.
5. Wurden in Schritt 2 Antworten erhalten, so wird aus den in diesen Antworten enthaltenen Informationen die Erfolgsrate der einzelnen Träger geprüft. Ist diese hoch (d.h. alle Träger zeigen gute Übertragungsqualität), so wird mit Schritt 6 fortgefahren.
6. Der Sender verschickt Daten im Hochgeschwindigkeitsmodus und prüft die Übertragungsqualität.
7. Ist die Übertragungsqualität ausreichend, so wird der Hochgeschwindigkeitsmodus verwendet, sonst der redundante Modus.
8. Zeigt Schritt 5, dass nicht alle Träger ausreichende Übertragungsqualität besitzen, so wird geprüft, ob zumindest einige davon arbeiten. Falls ja, so ist die Erfolgsrate ausreichend für den redundanten Modus, ansonsten wird in Schritt 3 der Einzelmodus geprüft.

### Bezugsziffern:

T1 ... Tk: Trägerfrequenzen
1 - 8: Schritte des Auswahlverfahrens der Modulationsart

## Patentansprüche

1. Verfahren zum Übertragen von Daten über einen Kanal, dadurch gekennzeichnet, dass die Übertragungseigenschaften des Kanals gemessen werden und abhängig von den Übertragungseigenschaften adaptiv unterschiedliche Modulationsarten gewählt werden, und dass mindestens eine der Modulationsarten ein Mehrträgerverfahren ist, bei welchem über den Frequenzbereich des Kanals verteilt mehrere modulierte Trägerfrequenzen gesendet werden.

2. Verfahren nach Anspruch 1, dadurch gekennzeichnet, dass die Übertragungseigenschaften wiederholt gemessen werden und Auswahl der Modulationsarten automatisch an die jeweiligen Übertragungseigenschaften angepasst wird.

3. Verfahren nach einem der vorangehenden Ansprüche, dadurch gekennzeichnet, dass die Daten in Telegrammen verschickt werden, wobei jedes Telegramm eine Präambel und einen Datenteil aufweist, und dass mindestens ein Teil der Modulationsarten aus der Präambel erkennbar ist.

4. Verfahren nach Anspruch 3, dadurch gekennzeichnet, dass eine erste Präambel verwendet wird, um eine erste Modulationsart zu kennzeichnen, und dass eine zweite Präambel verwendet wird, um eine zweite Modulationsart zu kennzeichnen, wobei die zweite Präambel einer bitweisen Inversion der ersten Präambel entspricht.

5. Verfahren nach einem der vorangehenden Ansprüche, dadurch gekennzeichnet, dass in mindestens einer ersten der Modulationsarten mehrere Träger redundant mit den gleichen Daten moduliert werden.

6. Verfahren nach Anspruch 5, dadurch gekennzeichnet, dass in mindestens einer zweiten der Modulationsarten die Träger der ersten Modulationsart mit unterschiedlichen Daten moduliert werden.

7. Verfahren nach einem der vorangehenden Ansprüche, dadurch gekennzeichnet, dass in mehreren, insbesondere allen, der Modulationsarten die Daten mit gleichem Format übermittellt werden, insbesondere mit gleicher Datenrate und gleicher Paketlänge, derart, dass sie in gleicher Weise demoduliert werden können.

8. Verfahren nach einem der vorangehenden Ansprüche, dadurch gekennzeichnet, dass in mindestens einer der Modulationsarten nur ein einziger Träger gesendet wird.

9. Verfahren nach Anspruch 8, dadurch gekennzeichnet, dass die Frequenz des einzigen Trägers ausgewählt wird, indem die Übertragungsqualität des Kanals auf mehreren Frequenzen bestimmt und die Frequenz mit der besten Übertragungsqualität ausgewählt wird.

10. Verfahren nach einem der Ansprüche 8 oder 9, dadurch gekennzeichnet, dass die Frequenz des einzigen Trägers eine der Frequenzen ist, die im Mehrträgerverfahren eingesetzt werden und/oder dass dem einzigen Träger mehr Leistung zugeführt wird als dem entsprechenden Träger im Mehrträgerverfahren.
